# EUROPEAN PATENT APPLICATION

(11) **EP 4 580 145 A1**
(43) Date of publication of application: **02.07.2025**
(21) Application number: 24223451.6
(22) Date of filing: 27.12.2024
(51) Int. Cl.: H04L 41/0823, H04W 24/02, H04W 24/04, H04W 84/18, H04W 88/08

(54) **ACCESS POINT, SWITCH AND SITE DETERMINED REDUNDANCY**

(30) Priority: 29.12.2023 IN 202341089657; 05.12.2024 US 202418970751
(71) Applicant: Juniper Networks, Inc., Sunnyvale, CA 94089-1206 (US)
(72) Inventor: KUMAR, Gaurav, Sunnyvale, 94089-1206 (US); LU, Yong, Sunnyvale, 94089-1206 (US); WEI WEI CHU, Daniel, Sunnyvale, 94089-1206 (US); WANG, Wenfeng, Sunnyvale, 94089-1206 (US); THOMAS, Jacob, Sunnyvale, 94089-1206 (US); GOVIND BELGAL, Trishna, Sunnyvale, 94089-1206 (US); FREI, Randall W., Sunnyvale, 94089-1206 (US); PERIS, Vinod, Sunnyvale, 94089-1206 (US)
(74) Representative: D Young & Co LLP

(57) **Abstract**

This disclosure describes a network management system configured to determine, for each AP of the plurality of APs and based on received signal strength indicators (RSSIs) of each AP of the plurality of APs, one or more strong neighbors of each AP. compute an AP redundancy score for each AP of the plurality of APs indicative of a redundancy of each AP; compute, based on the AP redundancy scores, at least one of: a switch redundancy score for each network switch associated with one or more of the plurality of APs, wherein the switch redundancy score is indicative of a redundancy of each network switch, or a site redundancy score, wherein the site redundancy score is indicative of an overall redundancy of the network site; and invoke, based on the AP redundancy scores, the switch redundancy score, or the site redundancy score, one or more actions.

## Description

This application claims the benefit of US Patent Application No. 18/970,751, filed 5 December 2024, which claims the benefit of IN Provisional Patent Application No. 202341089657, filed 29 December 2023, the entire content of each application is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. In the case of a client device running a cloud-based application, such as voice over Internet Protocol (VOIP) applications, streaming video applications, gaming applications, or video conference applications, data is exchanged during an application session from the client device through one or more APs and one or more wired network devices, e.g., switches, routers, and/or gateway devices, to reach the cloud-based application server.

The APs may be connected to switches located throughout a network site that provide access to a wide area network (WAN). In some examples, the placement and/or configuration of the APs and switches of the network site, or a given area of the network site, may lack network redundancy. For example, a given area of the network site may include a single switch connected to several APs and provide WAN access for the APs. In these examples, when the switch of the given area of the network site fails or experiences reduced functionality, the APs connected to the switch may lose access to the WAN which results in the given area of the network site losing WAN connectivity.

### SUMMARY

Particular aspects are set out in the appended independent claims. Various optional embodiments are set out in the dependent claims.

In general, this disclosure describes one or more techniques for determining network redundancy at an access point (AP)-level, switch-level, and/or site-level, and performing an action based on the determined network redundancy. For example, a computing device that manages wireless networks at one or more of sites (e.g., network management system (NMS)) may compute a score that indicates a level of network redundancy of a configuration and/or placement of APs and switches within a given area of a site or facility, and/or a score that indicates a level of network redundancy of the site/facility as a whole. In some examples, the NMS may weigh the redundancy scores based on one or more metrics regarding the APs. Based on the redundancy scores, the NMS may perform an action, such as generating notifications, graphical indicators within dashboards of a graphical user interface (GUI), and/or other outputs that include information indicative of the network redundancy and/or recommendations to modify the configuration or placement of the APs and switches of the site to improve network redundancy.

In some examples, the NMS may determine neighbor relationships between APs based on information such as received signal strength indicator (RSSI) values of beacons received by the APs and location data of the APs. The NMS uses the information indicative of neighbor relationships and network configuration information (e.g., network topology of APs and switches) to determine redundancy scores for the APs and the switches to which the APs are connected (referred to herein as a "switch redundancy score"), and/or for a site as a whole (referred to herein as "site redundancy score"). In some examples, the NMS may weigh the switch redundancy scores and/or site redundancy score based on information such as usage of the APs and associated switches, criticality of the APs/switches, the types of applications used by clients of the APs, and other information. Based on the information, the NMS may perform an action, such as generating a notification including information indicative of the network redundancy and/or recommendations to improve the network redundancy, generating a user interface (UI) that may include UI elements representative of a map of the site and information overlayed on the map to indicate AP locations, switches associated with the APs, and redundancy scores of the APs and switches, and/or a redundancy score of the site as a whole, or the like.

The techniques of this disclosure may provide one or more technical advantages and practical applications. As an example, the techniques described herein may enable a network administrator to understand the network redundancy of a site or a given area of the site and automatically recommend the placement and/or configuration of APs and/or network switches of the site to optimize the network redundancy. Moreover, the use of weighted redundancy scores may enable a network administrator to ensure network redundancy in high traffic areas and/or areas with clients using critical applications while avoiding unnecessary expense in maintaining redundant equipment in low traffic areas.

In one example, the disclosure is directed to a network management system in communication with a plurality of access points (APs) and network switches at a network site, the network management system comprising a memory; and one or more processors in communication with the memory and configured to: determine, for each AP of the plurality of APs and based on received signal strength indicators (RSSIs) of each AP of the plurality of APs, one or more strong neighbors of each AP; compute an AP redundancy score for each AP of the plurality of APs indicative of a redundancy of each AP; compute, based on the AP redundancy scores, at least one of: a switch redundancy score for each network switch associated with one or more of the plurality of APs, wherein the switch redundancy score is indicative of a redundancy of each network switch, or a site redundancy score, wherein the site redundancy score is indicative of an overall redundancy of the network site; and invoke, based on the AP redundancy scores, the switch redundancy score, or the site redundancy score, one or more actions.

In another example, this disclosure is directed to a method, comprising: determining, by a network management system and for each AP of a plurality of APs and based on received signal strength indicators (RSSIs) of each AP of the plurality of APs, one or more strong neighbors of each AP, wherein the network management system is in communication with the plurality of APs and a plurality of network switches at a network site; compute an AP redundancy score for each AP of the plurality of APs indicative of a redundancy of each AP; compute, based on the AP redundancy scores, at least one of: a switch redundancy score for each network switch associated with one or more of the plurality of APs, wherein the switch redundancy score is indicative of a redundancy of each network switch, or a site redundancy score, wherein the site redundancy score is indicative of an overall redundancy of the network site; and invoking, by the network management system and based on the AP redundancy scores, the switch redundancy score, or the site redundancy score, one or more actions.

In yet another example, computer-readable media comprising instructions that, when executed, are configured to cause processing circuity of a computing system to: determine, for each AP of the plurality of APs and based on received signal strength indicators (RSSIs) of each AP of the plurality of APs, one or more strong neighbors of each AP; compute an AP redundancy score for each AP of the plurality of APs indicative of a redundancy of each AP; compute, based on the AP redundancy scores, at least one of: a switch redundancy score for each network switch associated with one or more of the plurality of APs, wherein the switch redundancy score is indicative of a redundancy of each network switch, or a site redundancy score, wherein the site redundancy score is indicative of an overall redundancy of the network site; and invoke, based on the AP redundancy scores, the switch redundancy score, or the site redundancy score, one or more actions.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a block diagram of an example operation of determining network redundancy of network switches of a site, in accordance with one or more techniques of the disclosure.
FIG. 7 is a block diagram illustrating an example operation of determining network redundancy of network switches of a site, in accordance with one or more techniques of this disclosure.
FIG. 8 is a flow chart illustrating an example operation of determining network redundancy, in accordance with one or more techniques of this disclosure.

### DETAILED DESCRIPTION

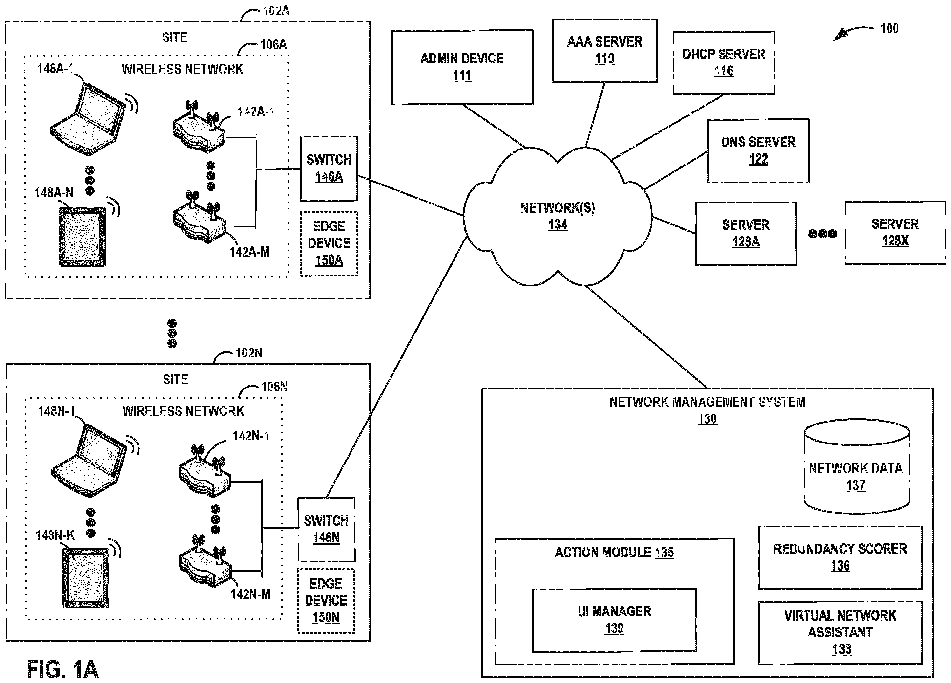

FIG. 1A is a block diagram of an example network system 100 including network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-M at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device, respectively, associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. Network data 137 may include additional data received from one or more network components such as geolocation data received from one or more of APs 142 (e.g., Global Positioning System data generated by APs 142), application traffic data, device identifiers of devices connected to APs 142, and other data.

NMS 130 may include one or more computing devices. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In accordance with one or more techniques of this disclosure, NMS 130 is configured to determine network redundancy at an access point (AP)-level, switch-level, and/or site-level, and performing an action based on the determined network redundancy. For example, NMS 130 is configured to determine neighbor relationships between APs 142 in sites 102. NMS 130 uses the determined neighbor relationships and information regarding network configuration to determine redundancy scores for the APs, switches, and/or the site that are indicative of their respective redundancy. NMS 130 may perform one or more actions based on the determination of the redundancy scores such as generate a recommendation regarding the configuration of a network at one of sites 102, provide a visual indication of the redundancy scores of admin device 111, and other actions.

NMS 130 may determine neighbor relationships between one or more of APs 142. As part of determining the neighbor relationships, each of APs 142 may broadcast a beacon for other APs to detect and process. In an example, AP 142A broadcasts a beacon that is received by one or more other APs. The next AP then broadcasts a beacon for one or more other APs to detect and determine whether they were able to detect the beacon. In some examples, an AP of APs 142 may transmit a beacon that is not received or detected by any other APs. NMS 130 may cause APs 142 to broadcast a beacon such as a BLUETOOTH beacon. Additionally, or alternatively, APs 142 may broadcast a signal using one or more other communication protocols for detection by other APs.

Each of APs 142 that detects a beacon or other signal may determine the signal strength of the beacon. APs 142 may use received signal strength indicator (RSSI) values to determine the signal strength between the broadcasting AP and the receiving AP. For example, AP 142A-1 may broadcast a beacon that is received by AP 142A-M. AP 142A-M processes the received signal and determines that the received signal has an RSSI value. NMS 130 may use the RSSI values determined by APs 142 to identify neighbor relationships between APs 142. In the example above, NMS 130 may determine that AP 142A-1 and AP 142A-M are neighboring APs because AP 142A-M received a beacon from AP 142A-1. In some examples, NMS 130 may generate, based on the RSSI values, a neighborhood graph that includes nodes representative of the APs 142 and connections between the nodes in the neighborhood graph representative of the neighbor relationships between the APs. While the example described herein is described with respect to the use of RSSI values to identify neighbor relationships between APs 142, the examples may alternatively, or additionally, use round-trip-time (RTT) measurements measured by APs 142 to identify the neighbor relationships between APs 142.

NMS 130 may use other information instead of or in addition to measurements between APs 142. For example, NMS 130 may use location information such as geolocation data and mapping location data of APs 142 to identify neighbor relationships between APs 142. NMS 130 may use mapping data that includes information indicative of the relative location of an AP within a site of sites 102. For example, NMS 130 may use mapping information regarding the relative placement of APs 142 within a site provided by a network administrator in addition to RTT measurements to identify neighbor relationships between APs 142.

NMS 130 may categorize the identified neighbor relationships between APs 142 as being "distant" neighbors or "strong" neighbors. For example, NMS 130 may categorize a neighbor relationship between APs as "strong" if the RSSI value of the received beacon is greater than a threshold value of -72 db and categorize a neighbor relationship between APs as "distant" if the RSSI value of the received beacon is less than the threshold value of -72 db. NMS 130 may set any threshold value of RSSI used to determine strong neighboring APs that may provide redundancy for a client device.

NMS 130 may determine a subset of APs identified as strong neighbors of each other (referred to herein as "top neighbors"). NMS 130 may determine a number of top neighbors of an AP (e.g., top three neighbors) based on the three neighbors of an AP with the highest RSSI values (e.g., three neighbors of the AP with the three highest RSSI values). NMS 130, in the case of an AP having less than three strong neighbors, may determine that all the strong neighbors of the AP are the top neighbors of the AP. In some examples, NMS 130 may determine more than or less than three top neighbors for a given AP. Network data 137 may store neighboring information, including neighbor relationship information, as well as information identifying the top neighbors..

NMS 130 may include a redundancy scorer 136 configured to determine redundancy scores for one or more of APs 142 (referred to herein as "AP redundancy scores") based on the neighbor relationships. Redundancy scorer 136 may be a process, module, or other type of software component of NMS 130. Redundancy scorer 136 may determine AP redundancy scores that are indicative of the network redundancy of individual APs. Redundancy scorer 136 may use one or more types of information from network data 137 such as information indicative of the connectivity between APs and switches associated with the APs (e.g., information regarding which switch each AP is connected to) in addition to information regarding the neighbor relationships. For example, redundancy scorer 136 may use information indicating that AP 142A-1 is connected to switch 146A in determining a redundancy score for AP 142A-1.

Redundancy scorer 136 may determine an AP redundancy score for a base (or given) AP based on the number of parent switches of the strong/top neighbors of the base AP that are different than the base AP's parent switch. In an example, redundancy scorer 136 assigns a first AP redundancy score (e.g., of one (1)) to the base AP if the strong/top neighbors of the base AP have the same parent switch (e.g., strong/top neighbors do not have any different parent switches different than the parent switch of the base AP). A score of one may be indicative of no redundancy. Redundancy scorer 136 assigns a different (e.g., second) AP redundancy score (e.g., of two (2)) to the base AP if the strong/top neighbors of the base AP have one different parent switch than the parent switch of the base AP. A score of two may be indicative of a dual modular redundancy. Further, redundancy scorer 136 assigns a third AP redundancy score (e.g., of three (3)) to the base AP if the strong/top neighbors of the base AP have two different parent switches than the parent switch of the base AP. A score of three may be indicative of triple modular redundancy. As such, redundancy scorer 136 may determine a redundancy score (N) based on the number of parent switches of the strong/top neighbors that are different than the parent switch of the base AP (N-1).

Based on the AP redundancy scores, redundancy scorer 136 may determine switch redundancy scores for one or more switches, such as switch 146A and switch 146N, that are each indicative of the redundancy of a particular switch. Redundancy scorer 136 may determine a switch redundancy score for a particular switch that is based on a percentage of the number of APs that have redundancy (e.g., APs with a redundancy score greater than one (1)) connected to the particular switch. For example, redundancy scorer 136 may compute a switch redundancy score for switch 146A based on a number of APs 142 of switch 146A with redundancy (e.g., number of APs with AP redundancy score > 1 of switch 146A) divided by a total number of APs of switch 146A.

Redundancy scorer 136 may compute site redundancy scores that are indicative of the redundancy of a site as a whole. Redundancy scorer 136 may compute a redundancy score that indicates an overall redundancy of a site such as site 102A. The redundancy score may include the number of APs within a site with redundancy (e.g., with redundancy scores greater than 1) divided by the total number of APs within the site.

Redundancy scorer 131 may weigh the switch redundancy scores and/or site level redundancy scores. Redundancy scorer 136 may obtain one or more usage metrics from network data 137 regarding use of APs and associated switches. Redundancy scorer 136 may obtain metrics such as information regarding how client devices have been connected to an AP (e.g., number of client devices connected to AP, duration of client devices connectivity to AP, etc.), data consumption by client devices connected to the AP (e.g., traffic throughput), the importance of client devices connected to an AP, other usage metrics, the location of APs within a site (e.g., geolocation data, mapping data, etc.), and other metrics. Redundancy scorer 136 may weigh the switch redundancy scores and/or site level redundancy scores using the usage metrics to compute weighted switch redundancy scores and/or site redundancy scores. In an example, redundancy scorer 136 uses information regarding user hours of client devices connected to one or more of APs associated with a given switch to determine a weighted switch redundancy score for the given switch.

NMS 130 includes action module 135 configured to invoke an action based on the redundancy scores. Action module 135 may be a module, plugin, or other type of software component or process that includes one or more other software components, action module 135Action module 135Action module 135Action module 135 may be configured to generate one or more recommendations for a network administrator or device such as admin device 111. For example, action module 135action module 135 may generate a recommendation that one or more of the APs of a site should be rewired to be connected to a different switch. Action module 135 may generate recommendations that redundancy should be increased in one or more sections of site based on network traffic and redundancy scores in the one or more sections (e.g., high network traffic and low redundancy in the area of the one or more sections).

In some examples, action module 135 may generate one or more recommendations regarding the placement of one or more APs within a site. Action module 135 may use one or more metrics to determine an optimized placement of APs within a site. For example, action module 135 may use information regarding expected coverage by one or more APs of a site (e.g., APs 142A-1 through 142A-M of site 102A) to optimize the placement of the APs within the site.

In some examples, action module 135 may generate initial recommendations for configurating a new site to enable administrators that deploy the APs and/or switches of a site to optimize the configuration and/or placement of the APs and/or switches during an installation process to provide network redundancy. For instance, a client may provide information regarding a proposed configuration of site 102A to NMS 130. NMS 130 may determine the redundancy of the proposed configuration of site 102A, and based on the determined redundancy of the proposed configuration, action module 135 may generate one or more recommended changes to the proposed configuration to optimize the redundancy of site 102A.

In some examples, action module 135 may generate recommendations based on an expected addition of one or more APs. For example, NMS 130 may determine the redundancy of the site with the addition of the one or more APs, and based on the determined redundancy of the site with the addition of the one or more APs, action module 135 may generate a recommendation specifying the placement of one or more new APs and/or changes in the placement of currently deployed APs to maximize coverage and redundancy within a site. In another example, action module 135 may generate recommendations that more APs should be added and installed to meet one or more redundancy requirements or targets.

In some examples, action module 135 may generate recommendations regarding connections between APs and switches to provide network redundancy. Action module 135 may generate recommendations regarding which APs should be connected to switches. For example, action module 135 may generate a recommendation that includes a list of which APs should be connected to each switch within a site.

In some examples, action module 135 may generate recommendations based on one or more changes to a site and/or in response to a request from a network administrator. For example, NMS 130 may detect one or more changes in the network (e.g., changes in the environment of a site (e.g., network topology or network behavior), changes to the operation of one or more APs, changes in location of the APs or switches, etc.). In response, NMS 130 may determine the redundancy of the network (e.g., compute the redundancy scores based on the current network environment). Action module 135 may generate one or more recommendations based on the redundancy scores that were computed in response to the one or more changes in the network. Action module 135 may generate the recommendation based on the types of changes that have been made or that are proposed to be made to the site.

In some examples, action module 135 may generate recommendations that include recommendations regarding color coding one or more cables of a site and wiring the APs and switches based on the color-coding. For example, during an initial setup of a site action module 135 may recommend labelling all network cables from a first switch as a first color (e.g., blue) and all the network cables from a second switch as a second color (e.g., green). In this example, action module 135 may generate a recommendation specifying which APs to wire to the two switches based on the color coding rather than having an installer connect the APs and switches based purely on convenience. In another example, action module 135 may generate a recommendation that includes a recommendation to rewire one or more APs to different switches using the color coding of the wires.

In some examples, action module 135 may generate recommendations that are based on the location of network cables within a site. A site such as site 102A may include a plurality of cables that are run throughout the site (alternatively referred to as "cable runs") and that are used to connect APs to network switches. A network administrator may be unable to modify the locations of the cables due to one or more factors (e.g., the cables may be located under the floor in an active office, there may be physical constraints as to where cables can be located, etc.). In addition, some sites may have cables routed to different locations as opposed to one or more centralized network closets. Action module 135 may generate recommendations based on the location of the cable runs. For example, recommendation module may generate recommendations regarding the placement of one or more APs based on the locations of the cable runs (e.g., where the APs can be connected via the cables to network switches). Action module 135 may use information regarding the length of the cable runs to generate recommendations for placement of the APs within a site (e.g., to ensure that the cables can reach an AP at a given spot) that includes generating visualization of a map of a site overlayed with indicators of where APs can be placed based on the cable runs.

In some examples, action module 135 may generate recommendations based on one or more APs being equipped with dual uplink. One or more APs of APs 142 may be equipped with dual uplink capabilities that enable the APs to be simultaneously connected to two network switches for WAN access. Based on the determined redundancy of the network including dual uplink APs, action module 135 may generate recommendations that include recommendations regarding which network switches the APs with dual uplink capabilities should be connected to. Action module 135 may recommend that a particular AP (e.g., AP 142A-1) should be connected to two or more different switches (e.g., switch 146A and another switch) to maximize the redundancy of a site. Action module 135 may generate recommendations that indicate which switch the primary port of the AP should be connected to and which switch the secondary port of the AP should be connected to.

Action module 135 may generate recommendations regarding the configured behavior of an AP and/or switch when either the switch or AP fails at the site that includes APs with dual uplink. Action module 135 may generate recommendations of which switch to connect to the secondary port of one or more APs with dual uplink and verify that, in the case of one or more switch failures that the configuration maximizes the coverage provided by the APs. Moreover, action module 135 may generate recommendations that change based on whether an AP failure or switch failure is being modeling for APs with dual uplink capability.

Based on generating the recommendation, action module 135 may provide the recommendation to one or more devices such as admin device 111. In some examples, action module 135 may generate one or more recommendations based on the weighted redundancy scores. For example, action module 135 may be configured to generate recommendations for high traffic areas and refrain from generating recommendations for low traffic areas (e.g., to avoid the unnecessary expense and time in improving network redundancy for low traffic areas).

Additionally, or alternatively, action module 135 of NMS 130 may include UI manager 139. UI manager 139 may be a software component, module, plugin, or other type of software process. UI manager 139 may be configured to generate user interfaces (UIs) such as graphical user interfaces (GUIs). UI manager 139 may generate UI elements representing visualizations of network configurations of sites such as sites 102. UI manager 139 may generate UI elements representing visualizations of sites that are maps of the sites overlayed with visual indicators of one or more APs located within the sites. In addition, UI manger 139 may generate the visual indicators that are color-coded to indicate which switches APs are connected to (e.g., all the APs connected to a first switch are blue, all APs connected to a second switch are yellow, etc.) and/or the network redundancy of the switches (e.g., different colors representing different redundancies). In an example, UI manager 139 generates a visualization of site 102A that includes a map of site 102A overlayed with visual indicators representing the locations of APs within site 102A. UI manager 139 additionally color-codes the visual indicators representing the APs to indicate which parent switch each AP is connected to.

UI manager 139 may generate visual representations of one or more recommendations regarding AP placement and/or configuration by action module 135. UI manager 139 may generate a visualization of a map of a site that includes visual indicators of where action module 135 recommends placement and/or configuration of one or more APs within the site. In some examples, UI manager 139 may generate the visualization as including one or more visual indicators of one or more network cables with the site and the routing of the network cables.

UI manager 139 may generate GUIs that include visualizations of one or more metrics of a plurality of sites 102. For example, UI manager 139 may generate a graph that includes information regarding the site redundancy values for a plurality of sites. UI manager 139 may generate one or more graphs to aid network administrators in visualizing the redundancy and configurations of a plurality of locations. For example, UI manager 139 may generate a GUI that includes visual indications of the redundancy of APs, switches, and/or a site as whole.

The techniques of this disclosure provide one or more technical advantages and practical applications. For example, the techniques enable an administrator to identify areas within a site such as site 102A where a placement and/or configuration of one or more APs and switches results in limited or no redundancy and automatically recommend the placement and/or configuration of APs and/or network switches of the site to optimize the network redundancy. Moreover, the techniques enable NMS 130 to identify, through weighting of the redundancy scores, locations where increased redundancy would be beneficial, such as increasing redundancy in high-traffic areas and minimizing expenditures and effort to improve redundancy in low traffic areas where such redundancy may not be necessary. For example, NMS 130 may proactively determine that a location with a high concentration of client devices should have increased redundancy to ensure that the clients are not impacted in case of an equipment failure. In another example, the techniques of this disclosure may obviate the need for a physical inspection of a site to determine the redundancy of the site.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

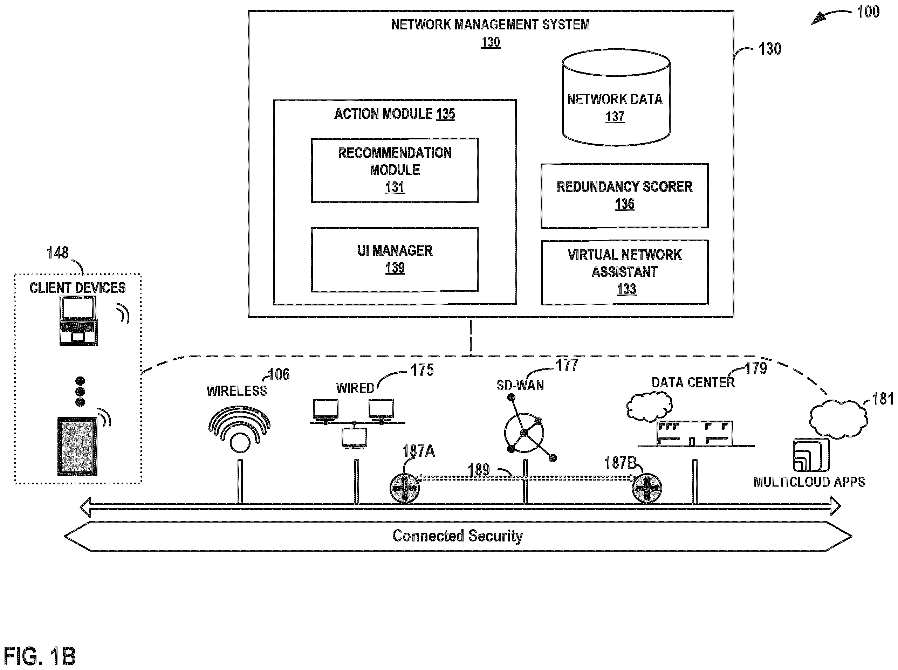

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, NMS 130 is configured to determine network redundancy at an access point (AP)-level, switch-level, and/or site-level, and perform an action based on the determined network redundancy. For example, NMS 130 may determine redundancy scores for the APs based on neighbor relationships between APs. In some examples, NMS 130 determines redundancy scores for one or more network switches based on the AP redundancy scores. NMS 130 may determine redundancy scores for a site as a whole. While the examples described herein are described with respect to the network redundancy of access points and/or switches of wireless network 106 and wired network 175, the techniques described herein may similarly be applied to other network access devices, routers 187 of SD-WAN or other network devices that provide access to the WAN.

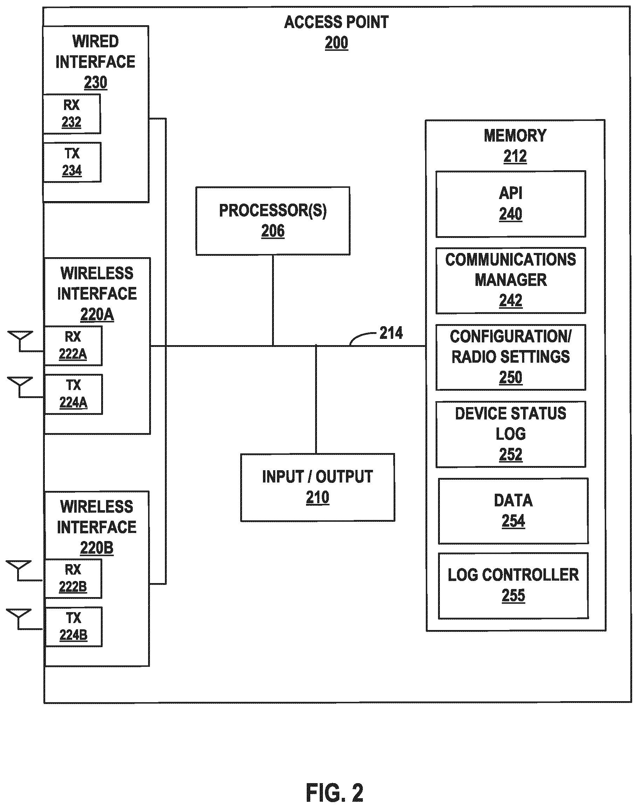

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein. Such software may also be provided by way of a computer-readable transmission medium (such as may be received via wired interface 230 or wireless interface 220, or such as may carry instructions over bus 214 from the memory 212 to the processor 206) that conveys instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more of processor(s) 206 to perform the techniques described herein.

In the example of FIG. 2, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

AP device 200 may broadcast a beacon for one or more other APs to detect. AP device 200 may broadcast a beacon in response to an indication from a network management system such as network management system 130 as illustrated in FIGS. 1A-1B. AP device 200 may periodically broadcast a beacon. AP device 200 may periodically broadcast a beacon at set time intervals (every 24 hours, every hour, etc.). For example, AP device 200 may broadcast a beacon to other APs every thirty minutes.

AP device 200 may detect beacons broadcasted by other APs. AP device 200 may detect a beacon broadcasted by other APs via one or more of wireless interfaces 220. Ap device 200 may receive the signal of a beacon via one or more of wireless interfaces 220 and process the signal to determine that AP device 200 has detected a beacon broadcasted by another AP.

AP device 200 may process a beacon detected by AP device 200. AP device 200 may process a detected beacon and determine an RSSI value of the detected beacon. In an example, AP device 200 detects a beacon broadcasted by another AP. AP device 200 processes the detected beacon and determines an RSSI value of the detected beacon.

AP device 200 may store information about detected beacons in data 254. In an example, AP device 200 detects a beacon broadcasted by another AP and stores information regarding an identifier of the other AP and the RSSI of the beacon in data 254. AP device 200 may maintain a log of beacons in data 254.

AP device 200 may store information regarding connection to one or more switches in data 254. For example, AP device 200 may receive discovery packets from neighboring switches that are connected to AP device 200. AP device 200 may store the information regarding connections to switches to assist an NMS in understanding associations between AP devices, such as AP device 200, and connected switches (e.g., to understand which APs are connected to which switches).

AP device 200 may provide information regarding detected beacons and other information to other devices. AP device 200 may provide information such as a log of detected beacons and associated device identifiers, geolocation data, usage metrics, and other information to other devices such as a switch that AP device 200 is connected to via wired interface 230. AP device 200 may periodically provide the information and/or provide the information in response to a request for information.

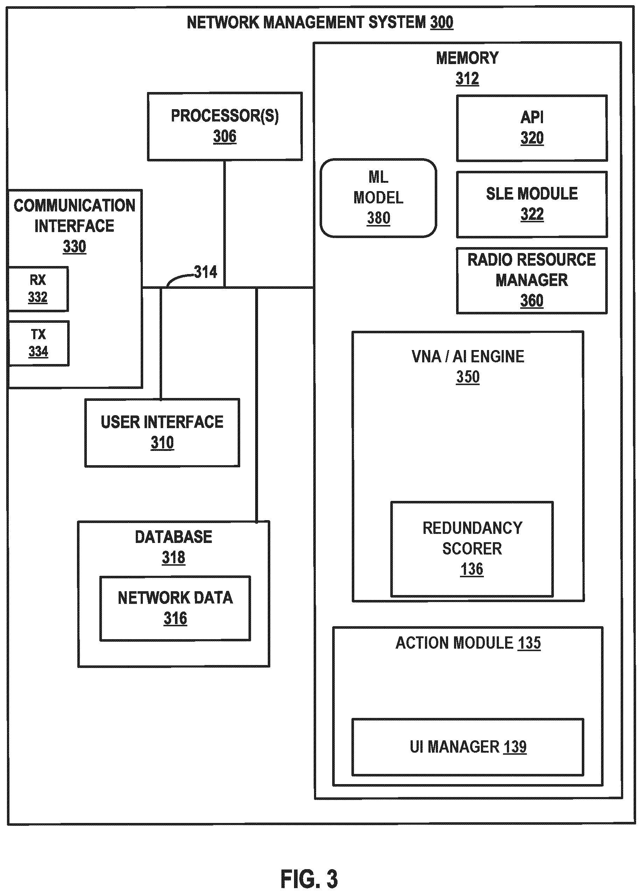

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more of processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such software may also be provided by way of a computer-readable transmission medium (such as may be received via communication interface 330, or such as may carry instructions over bus 314 from the memory 312 to the processor 306) that conveys instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In the example of FIG. 3, memory 312 includes an API 320, an SLE module 322, a virtual network assistant (VNA)/AI engine 350, and a radio resource management (RRM) engine 360. In accordance with the disclosed techniques, VNA/AI engine 350 includes action module 135. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

VNA/AI engine 350 may use action module 135 to generate recommendations for configuring a site. Action module 135 may correspond to action module 135 as illustrated in FIG. 1A. Action module 135 may be configured to invoke an action based on redundancy scores such as AP redundancy scores, switch redundancy scores, and/or site redundancy scores. For example, action module 135 may invoke an action based on the redundancy scores for one or more APs of a site. In some examples, action module 135 may be similar to action module 135 as illustrated in FIGS. 1A-1B. Action module 135 may generate recommendations for selection and presentation by another module or software component. Action module 135 may use one or more machine learning models such as ML model 380 to process information and generate recommendations. For example, action module 135 may provide information to a machine learning model and use the machine learning model to generate a recommendation that optimizes the placement and configuration of one or more APs.

VNA/AI engine 350 includes redundancy scorer 136. Redundancy scorer 136 may correspond to redundancy scorer 136 as illustrated in FIG. 1A. For example, redundancy scorer 136 may determine redundancy scores at one or more levels of a site such as at the AP-level, the switch-level, and/or the site level. Redundancy scorer 136 may generate redundancy scores that are weighted based on one or more factors. For example, redundancy scorer 136 may weight redundancy scores based on network traffic, criticality of clients connected to one or more of the APs, criticality of the APs, location data of the one or more APs, usage metrics, and other information.

VNA/AI engine 350 may determine the criticality of APs and switches as a numerical score representative of the criticality. VNA/AI engine 350 may use information regarding the number of clients connected to an AP, number of clients associated with APs connected to a switch, volume of network traffic, criticality of applications supported by an AP and/or switch, wireless signal coverage, and/or other factors. For example, VNA/AI engine 350 may determine a relatively high criticality score for an AP that supports traffic related to a critical application.

VNA/AI engine 350 may generate recommendations regarding sustainability and efficiency of APs and switches. VNA/AI engine 350 may generate recommendations to disable or reduce power provided to one or more APs and/or switches based on the redundancy of those switches. For example, VNA/AI engine 350 may recommend that an administrator disable an AP to reduce power consumption within a site, based on that AP having a sufficient redundancy score (e.g., there being enough other APs to support clients of the disabled AP). In addition, VNA/AI engine 350 may determine that a given switch has a sufficient redundancy score to enable the rebooting and servicing of the switch during regular hours (e.g., other switches and APs can support the clients associated with the given switch while the given switch is offline).

Action module 135 includes UI manager 139. UI manager 139 may correspond to UI manager 139 as illustrated in FIG. 1Ay. Action module 135 may cause UI manager 139 to perform one or more actions.

Action module 135 may cause UI manager 139 may generate a UI and output the UI for display. UI manager 139 may generate a UI that includes one or more recommendations generated by action module 135. For example, UI manager 139 may generate a UI that includes visual indications of one or more APs and the respective location of each AP within a site as well as visual indication of a recommended change in the configuration of the APs within the site. UI manager 139 may cause one or more components of NMS 300 to output the GUI for display. In some examples, UI manager 139 may provide information regarding the UI to one or more devices for display.

NMS 300 may use one or more ML models such as ML model 380. ML models 380 may include one or more ML models configured to generate recommendations for NMS 300. For example, action module 135 may use ML model 380 to generate recommendations for modifying the configuration of one or more APs. In addition, action module 135 may use ML model 380 to generate a recommendation regarding an initial configuration of a network site and/or a recommendation regarding connecting one or more APs of the plurality of APs to one or more switches of a plurality of switches.

ML model 380 may generate recommendations based on weighted redundancy scores. ML model 380 may include one or types of machine learning models, such as clustering models. A developer or administrator may train ML model 380 based on one or more objectives that include optimizing wireless service coverage by APs, ensuring sufficient AP redundancy to avoid flooding of APs in case of failure (e.g., avoiding flooding a single AP with clients in case of another AP failing), and/or avoiding flooding of switches. Additionally, or alternatively, the developer may train ML model 380 based on customer topologies. For example, ML model 380 compare customer topologies to identify optimized topology designs based on cost and other factors.

In some examples, ML model 380 may comprise a supervised ML model that is trained, using training data comprising pre-collected, labeled network data received from network devices (e.g., client devices, APs, switches and/or other network nodes), to determine recommendations regarding the configuration of a site. The supervised ML model may comprise one of a logistical regression, naive Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

Although the techniques of the present disclosure are described in this example as performed by NMS 300, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

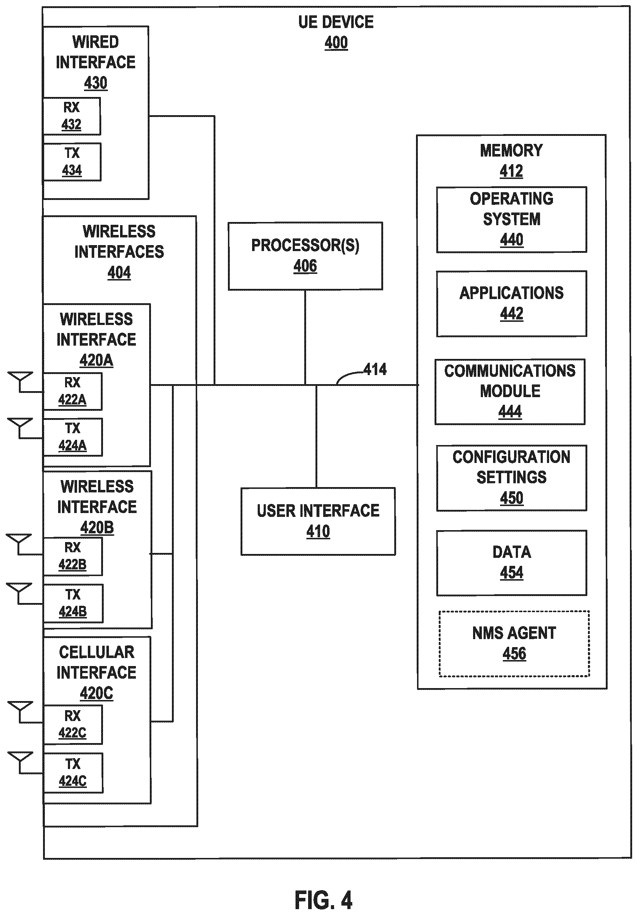

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein. Such software may also be provided by way of a computer-readable transmission medium (such as may be received via wired interface 430 or wireless interfaces 404, or such as may carry instructions over bus 414 from the memory 412 to the processor 406) that conveys instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

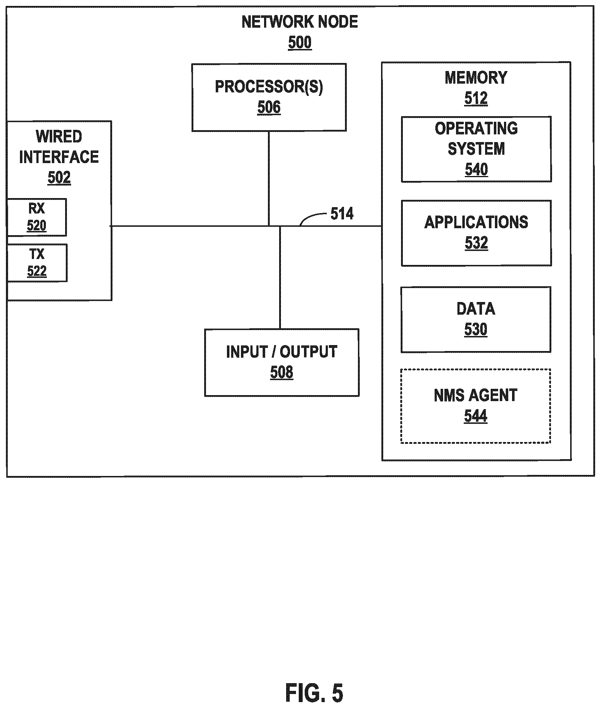

FIG. 5 is a block diagram illustrating an example network node 500, in accordance with one or more techniques of this disclosure. In one or more examples, the network node 500 implements a device or a server attached to the network 134 of FIG. 1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In the example of FIG. 5, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540, and data/information 530. Data 530 may include a system log and/or an error log that stores event data, including behavior data, for network node 500. In addition, data 530 may include information indicating one or more APs that are connected to network node 500. Network node 500 may provide the information regarding connected APs to an NMS, such as NMS 130 as illustrated in FIG. 1A, for NMS 130 to determine which APs are associated with network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or another module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544, which may be a software component of network node 500 that may periodically create a package of the statistical data according to a second periodic interval, e.g., every 3 minutes. The collected and sampled data periodically-reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

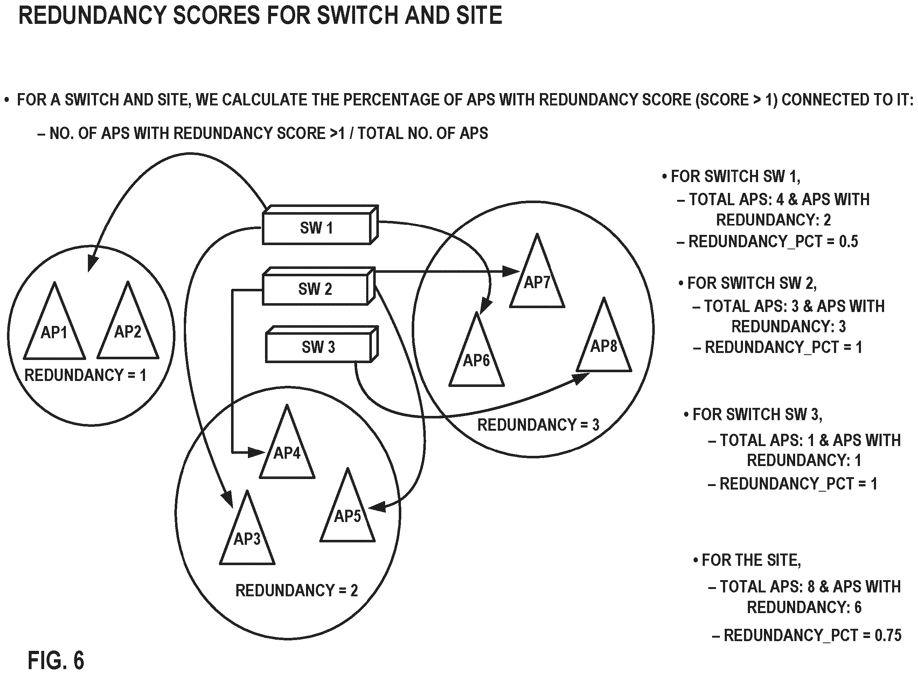

FIG. 6 is a block diagram of an example operation of determining network redundancy of network switches of a site, in accordance with one or more techniques of the disclosure. For the purposes of clarity, FIG. 6 is described in the context of FIG. 1A.

In the example of FIG. 6, a site such as site 102A includes three switches (labeled in FIG. 6 as "SWT", "SW2", and "SW3", hereinafter "SWXs") that are connected to eight APs (labeled in FIG. 6 as "AP1" through "AP8", hereinafter "APXs"), respectively. Site 102A may include APXs distributed throughout site 102A in one or more locations.

NMS 130 may determine neighbor relationships among one or more APs of APXs. For example, NMS 130 may determine neighbor relationships based on obtaining RSSI values of beacons broadcasted by the APs. In the example of FIG. 6, NMS 130 may determine that AP1 and AP2 are neighbors; AP3, AP4, and AP5 are neighbors; and that AP6, AP7, and AP8 are neighbors based on the respective RSSI values received by each AP. Based on determining the neighbor relationships, NMS 130 may form groups of neighboring APs.

NMS 130 may determine a redundancy score for each of APXs. In this example, NMS 130 may determine that neighbors AP1 and AP2 are connected to the same switch (e.g., SW 1) and may specify an AP redundancy score of 1 for AP1 and AP2 to indicate the group of AP1 and AP2 has no redundancy. Similarly, NMS 130 may determine that neighbors AP3, AP4, and AP5 are connected to different switches (e.g., SW 1 and SW 2), respectively, and may specify an AP redundancy score of 2 for AP3, AP4, and AP5 to indicate the group of AP3, AP4, and AP5 has dual modular redundancy (e.g., APs have redundancy based on a redundancy score greater than one (1)). Moreover, NMS 130 may determine that neighbors AP6, AP7, and AP8 are connected to three different switches (e.g., SW1, SW2, and SW3, respectively, and may specify an AP redundancy score of 3 for AP6, AP7, and AP8 to indicate the group of AP6, AP7, and AP8 has triple modular redundancy.

NMS 130 may determine a redundancy score for each switch of SWXs based on the number of APs connected to a particular switch having redundancy (e.g., with redundancy scores greater than one (1)) and the total number of APs connected to the switch. In the example of FIG. 6, NMS 130 may compute a switch redundancy score of 0.5 for SW1 based on the number of APs connected to SW1 having a redundancy score greater than one (e.g., AP3 and AP6) divided by the total number of APs connected to SW1 (e.g., AP1, AP2, AP3, and AP6). Similarly, NMS 130 may compute a switch redundancy score of 1 for SW2 based on the number of APs connected to SW2 having a redundancy score greater than one (e.g., AP4, AP5, and AP6) divided by the total number of APs connected to SW2 (e.g., AP4, AP5, and AP6). Likewise, NMS 130 may compute a switch redundancy score of 1 for SW3 based on the number of APs connected to SW3 having a redundancy score greater than one (e.g., AP8) divided by the total number of APs connected to SW3 (e.g., AP8).

NMS 130 may determine a site reliability score. NMS 130 may determine a site redundancy score that is indicative of the redundancy of a site as a whole. NMS 130 may determine the site reliability score based on the number of APs with redundancy (e.g., APs having a redundancy score greater than one) and the total number of APs in a site. For example, NMS 130 may determine that site 102A (represented by FIG. 6) has eight total APs and that six of the APs are in groups of APs with redundancy (e.g., AP3-AP8 are in groups with redundancy). In this example, NMS 130 may determine that the site has a redundancy score of .75 (e.g., 75 percent redundancy) computed based on the number of APs with redundancy divided by the total number of APs in the site.

NMS 130 may invoke one or more actions based on the determination of the redundancy score of site 102A. For example, NMS 130 may cause one or more modules or components, such as action module 135, to generate a notification and/or recommendations that are based on the redundancy scores determined by NMS 130. For example, NMS 130 may cause a user interface manager, such as UI manager 139, to generate a visualization that includes a map of site 102A overlayed with visual indicators of recommended AP placement locations determined by action module 135.

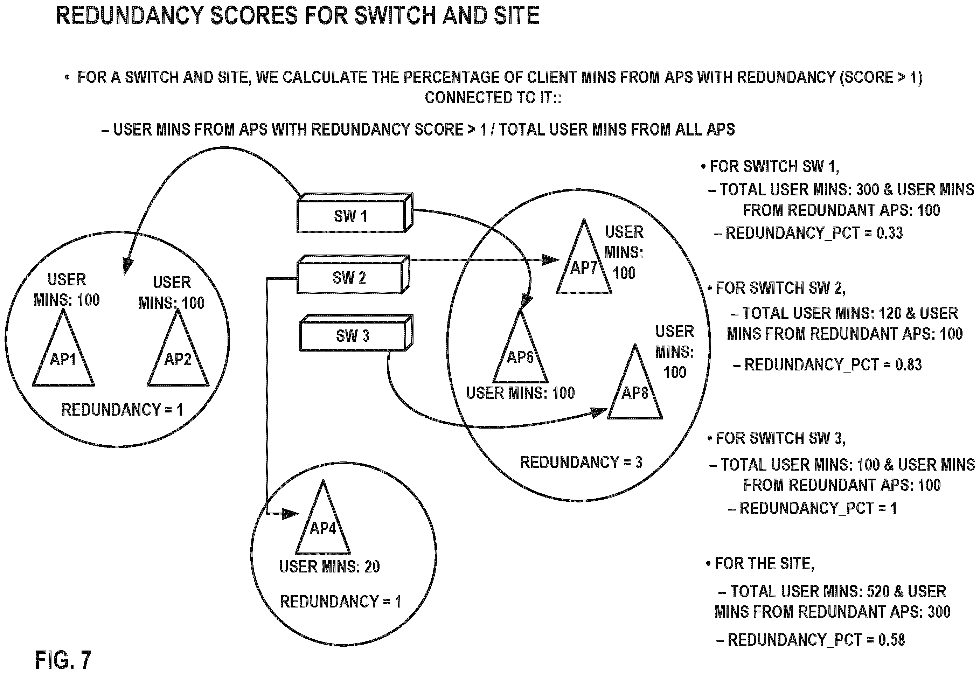

FIG. 7 is a block diagram illustrating an example operation of determining network redundancy of network switches of a site, in accordance with one or more techniques of this disclosure. For the purposes of clarity, FIG. 7 is described in the context of FIG. 1A.

NMS 130 may determine weighted switch redundancy scores for one or more switches of a site such as site 102A. NMS 130 may determine weighted switch redundancy scores based on redundancy scores of the switches and one or more types of information such as importance of clients connected to the switch (e.g., NMS 130 may weight a switch that provides WAN connections to a critical server more heavily than a switch that provides WAN connections to music streaming speakers), average/median data consumption of the switch and/or connected APs, peak data consumption of the switch and/or connected APs, number of clients connected to the APs, user minutes connected to the APs, and other metrics and/or types of information. NMS 130 may obtain the information from one or more sources such as network data 137 and/or directly from the APs or switches.

NMS 130 may determine a weighted redundancy score for each of the switches of site 102A. In the example of FIG. 7, NMS 130 weights the redundancy score of each switch using information regarding user minutes that are indicative of the length of time clients have spent connected to each AP of the switches. NMS 130 may determine the weighted redundancy score by comparing the number of user minutes for each AP with redundancy to the total number of user minutes for all of the APs for the switch. In the example of FIG. 7, NMS determines that, for switch SW1, clients have spent a total of 300 user minutes connected to the APs associated with SW1 and 100 minutes connected to an AP of switch SW1 that has redundancy (access point AP6). NMS 130 determines that switch SW1 has a weighted redundancy score of .33 (e.g., approximately 33 percent weighted redundancy). In another example, NMS 130 determines the weighted redundancy score for switch SW2. NMS 130 determines that switch SW2 has 120 total user minutes of clients connected to the APs associated with switch SW2 (access points AP4 and AP7). NMS 130 determines that of the 120 total user minutes, 20 user minutes are from access point AP4 and 100 user minutes are from access point AP7. Based on the determination regarding the distributed of user minutes between the two access points, NMS 130 determines that switch SW2 has a weighted redundancy score of .83 (e.g., approximately 83 precent weighted redundancy).

NMS 130 may determine a weighted site redundancy score. NMS 130 may determine a weighted site redundancy score based on one or more metrics and/or other pieces of information. NMS 130 may determine one or more weighted site redundancy scores based on a site redundancy score and one or more metrics. NMS 130 may use metrics such as the criticality of APs, the criticality of clients connected to particular APs, location of data of the APs (e.g., geolocation data, mapping data, etc.), and other metrics. In an example, NMS 130 determines a site redundancy score based on the time spent by clients connected to APs compared to the time spent by clients connected to APs with redundancy. NMS 130 determines that clients have spent a total of 520 minutes connected to APs of site 120A and 300 minutes connected to APs with redundancy (e.g., redundancy scores greater than 1). Based on the determination, NMS 130 determines that site 102A has a weighted redundancy score .58 (e.g., approximately 58 percent weighted redundancy).

NMS 130 may use the weighted redundancy scores in invoking one or more actions. For example, NMS 130 may use the weighted redundancy score to determine that an AP with no redundancy (e.g., access point AP4) is located in a part of site 102A that sees minimal traffic and client use (e.g., based on access point AP4 only recording 20 minutes of user time). Based on the determination regarding client use, NMS 130 may determine that increasing redundancy of access point AP4 is unnecessary due to the minimal user time. NMS 130 may use the weighted redundancy scores to cause one or more components, such as action module 135, to generate a recommendation to modify or refrain from modifying the configuration of one or more APs. For example, NMS 130 may generate a recommendation to the configuration of an AP based on a comparatively high weighted redundancy score while refraining from recommending the modification of a configuration of an AP based on a comparatively lower weighted redundancy score.. NMS 130 may apply weighting to the redundancy scores to enable different interpretations of the redundancy scores based on different circumstances.

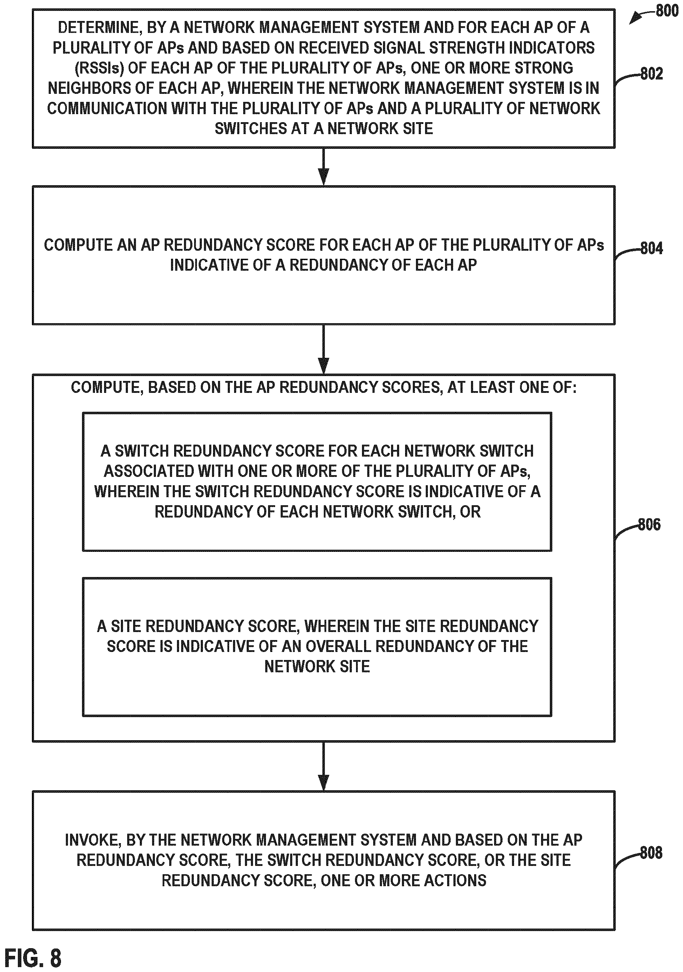

FIG. 8 is a flow chart illustrating an example operation of determining network redundancy and performance an action based on the determined network redundancy, in accordance with one or more techniques of this disclosure. For the purposes of clarity, FIG. 8 will be described in the context of FIG. 1A.

A network management system, such as NMS 130, determines, for each AP of a plurality of APs, such as APs 142, and based on received signal strength indicators (RSSIs) of each AP of APs 142, one or more strong neighbors of each AP, where NMS 130 is in communication with APs 142 and a plurality of network switches, such as switches 146, at a network site such as site 102A (802). NMS 130 may cause one or more of APs 142 to broadcast a beacon or beacon signal to for detected by one or more of APs 142. NMS 130 may determine that an AP is a strong neighbor of an AP broadcasting a beacon based on the RSSI being above a specified threshold (e.g., greater than - 72 dB). For example, NMS 130 may determine, for given AP, one or more strong neighbors based on the strong neighbors having an RSSI value above a threshold value.

NMS 130 computes an AP redundancy score for each AP of APs 142 indicative of a redundancy of each AP (804). NMS 130 may compute the AP redundancy score based on how many strong neighbor APs have a different parent switch. In an example, NMS 130 determines that two of the three strong neighbors of an AP have a different parent switch from the AP. Based on the determination, NMS 130 computes a redundancy score of 3 for the AP.

NMS 130 computes, based on the redundancy scores, at least one of a switch redundancy score for each of switches 146 associated with one or more of APs 142, where the switch redundancy score is indicative of redundancy of each network switch, or a site redundancy score, where the site redundancy score is indicative of an overall redundancy of site 102A (806). NMS 130 may compute the switch redundancy score based on the redundancy of APs connected to the switch of switch 146. In an example, NMS 130 determines that switch 146A is connected to two APs, one of which is strong neighbors with two other switches with redundancy and the other of which has no neighboring APs. NMS 130 determines that switch 146A has a redundancy score of .5. NMS 130 may determine the site redundancy score as a function of the total APs of a site and the numbers of APs with redundancy. In an example, NMS 130 determines that site 102A has ten APs and that of the ten APs, seven APs have redundancy. NMS 130, based on the determination, determines that site 102A has a redundancy score of .8.

NMS 130 invokes, based on the AP redundancy score, the switch redundancy score, or the site redundancy score, one or more actions (808). NMS 130 may invoke an action based on only one of or a combination of the different redundancy scores. NMS 130 may invoke actions such as generating recommendations regarding the configuration of site 102A and generating a GUI that includes a visualization of site 102A and the locations of one or more network components.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer readable medium may also or alternatively comprise a computer data transmission medium, such as a signal or carrier wave.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

In some examples, the computer-readable transmission media may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described approaches for a network management system configured to determine, for each AP of the plurality of APs and based on received signal strength indicators (RSSIs) of each AP of the plurality of APs, one or more strong neighbors of each AP. compute an AP redundancy score for each AP of the plurality of APs indicative of a redundancy of each AP; compute, based on the AP redundancy scores, at least one of: a switch redundancy score for each network switch associated with one or more of the plurality of APs, wherein the switch redundancy score is indicative of a redundancy of each network switch, or a site redundancy score, wherein the site redundancy score is indicative of an overall redundancy of the network site; and invoke, based on the AP redundancy scores, the switch redundancy score, or the site redundancy score, one or more actions.

Further examples of feature combinations taught by the present disclosure are set out in the following numbered clauses.

Clause 1. A network management system, the network management system comprising: memory; and one or more processors in communication with the memory, the one or more processors configured to: determine, for each access point (ap) of the plurality of aps of a network site and based on received signal strength indicators (rssis) of each ap of the plurality of aps, one or more strong neighbors of each ap; compute an ap redundancy score for each ap of the plurality of aps indicative of a redundancy of each ap; compute, based on the ap redundancy scores, at least one of: a switch redundancy score for each network switch associated with one or more of the plurality of aps, wherein the switch redundancy score is indicative of a redundancy of each network switch, or a site redundancy score, wherein the site redundancy score is indicative of an overall redundancy of the network site; and invoke, based on the ap redundancy scores, the switch redundancy score, or the site redundancy score, one or more actions.

Clause 2. The network management system of clause 1, wherein the one or more programmable processors are further configured to: obtain one or more metrics indicative of use of each ap of the plurality of aps; compute, based on the one or more metrics and the at least one of the switch redundancy scores or the site redundancy score, at least one of a weighted switch redundancy score or a weighted site redundancy score.

Clause 3. the network management system of clause 2, wherein the one or more metrics include one of: usage of each ap of the plurality of aps, location mapping of the location of each ap of the plurality of aps within the network site, geolocation data of each ap of the plurality of aps, criticality of one or more client devices connected to each ap of the plurality of aps, or application traffic data.

Clause 4. the network management system of clause 1, 2 or 3, wherein to invoke the one or more actions, the one or more processors are further configured to: display, on a graphical user interface (gui), a visual indication of at least one of: the redundancy of one or more aps, the redundancy of one or more network switches, or the redundancy of the site.

Clause 5. The network management system of any preceding clause, wherein to invoke the one or more actions, the one or more processors are further configured to: display, on a graphical user interface (gui), a visual indication of a recommendation regarding placement an ap.

Clause 6. The network management system of any preceding clause, wherein to compute the ap redundancy score for each ap, the one or more processors are configured to compute the ap redundancy score based on a number of strong neighbors of each ap with a different parent switch.

Clause 7. The network management system of any preceding clause, wherein to compute the switch redundancy score for each network switch, the one or more processors are configured to compute the switch redundancy score based on a number of one or more aps connected to a respective switch and how many of the one or more aps that have redundancy.

Clause 8. The network management system of any preceding clause, wherein to compute the site redundancy score, the one or more processors are configured to compute the site redundancy score based on a number of the plurality of aps and how many of the plurality of aps have redundancy.

Clause 9. The network management system of any preceding clause, wherein to invoke one or more actions, the one or more processors are further configured to: generate one or more recommendations specifying a configuration for redundancy of an ap or a network switch.

Clause 10. The network management system of clause 9, wherein the one or more processors are further configured to obtain information regarding one or more cable runs at the network site, and wherein to generate one or more one or more recommendations comprises generate, based on the information regarding the one or more cable runs, a recommendation specifying a particular ap of the plurality of aps to connect to a particular network switch.

Clause 11. The network management system of clause 9 or 10, wherein the one or more recommendations include for an ap of the plurality of aps equipped with dual uplink, a recommendation of which two network switches to respectively connect to a first port of the ap and a second port of the ap.

Clause 12. The network management system of clause 9, 10 or 11, wherein the one or more recommendations include in response to one or more changes to the network site, a recommendation to change which aps are connected to which switches.

Clause 13. The network management system of any of clauses 9 to 12, wherein to invoke one or more actions, the one or more processors are further configured to: generate one or more recommendations specifying a placement of one or more of the plurality of aps or one or more of the plurality of network switches.

Clause 14. The network management system of any of clauses 9 to 13, wherein the one or more recommendations include at least one of: a recommendation regarding an initial configuration of the network site, or a recommendation regarding connecting one or more aps of the plurality of aps to one or more switches of the plurality of switches.

Clause 15. A method, comprising: determining, by a network management system and for each access point (ap) of a plurality of aps of a network site and based on received signal strength indicators (rssis) of each ap of the plurality of aps, one or more strong neighbors of each ap, wherein the network management system is in communication with the plurality of aps and a plurality of network switches at a network site; compute an ap redundancy score for each ap of the plurality of aps indicative of a redundancy of each ap; compute, based on the ap redundancy scores, at least one of: a switch redundancy score for each network switch associated with one or more of the plurality of aps, wherein the switch redundancy score is indicative of a redundancy of each network switch, or a site redundancy score, wherein the site redundancy score is indicative of an overall redundancy of the network site; and invoking, by the network management system and based on the ap redundancy scores, the switch redundancy score, or the site redundancy score, one or more actions.

Clause 16. The method of clause 15, further comprising: obtaining, by the network management system, one or more metrics indicative of use of each ap of the plurality of aps; computing, by the network management system and based one the one or more metrics and the at least one of the switch redundancy scores or the site redundancy score, at least one of a weighted switch redundancy score or a weighted site redundancy score.

Clause 17. The method of clause 15 or 16, wherein the one or more metrics include one of: usage of each ap of the plurality of aps, location mapping of the location of each ap of the plurality of aps within the network site, geolocation data of each ap of the plurality of aps, criticality of one or more client devices connected to each ap of the plurality of aps, or application traffic data.

Clause 18. The method of clause 15, 16 or 17, wherein invoking the one or more actions further comprises: displaying, on a graphical user interface (gui), a visual indication of at least one of: the redundancy of one or more aps, the redundancy of one or more network switches, or the redundancy of the site.

Clause 19. The method of any of clauses 15 to 18, wherein invoking the one or more actions further comprises: displaying, on a graphical user interface (gui), a visual indication of a recommendation regarding placement of an ap.

Clause 20. A computer-readable medium comprising instructions that, when executed, are configured to cause processing circuity of a computing system to: determine, for each access point (ap) of the plurality of aps of a network site and based on received signal strength indicators (rssis) of each ap of the plurality of aps, one or more strong neighbors of each ap; compute an ap redundancy score for each ap of the plurality of aps indicative of a redundancy of each ap; compute, based on the ap redundancy scores, at least one of: a switch redundancy score for each network switch associated with one or more of the plurality of aps, wherein the switch redundancy score is indicative of a redundancy of each network switch, or a site redundancy score, wherein the site redundancy score is indicative of an overall redundancy of the network site; and invoke, based on the ap redundancy scores, the switch redundancy score, or the site redundancy score, one or more actions.

## Claims

1. A network management system, the network management system comprising:
memory; and
one or more processors in communication with the memory, the one or more processors configured to:
determine, for each access point, AP, of the plurality of APs of a network site and based on received signal strength indicators, RSSIs, of each AP of the plurality of APs, one or more strong neighbors of each AP;
compute an AP redundancy score for each AP of the plurality of APs indicative of a redundancy of each AP;
compute, based on the AP redundancy scores, at least one of:
a switch redundancy score for each network switch associated with one or more of the plurality of APs, wherein the switch redundancy score is indicative of a redundancy of each network switch, or
a site redundancy score, wherein the site redundancy score is indicative of an overall redundancy of the network site; and
invoke, based on the AP redundancy scores, the switch redundancy score, or the site redundancy score, one or more actions.

2. The network management system of claim 1, wherein to compute the AP redundancy score for each AP, the one or mor processors are configured to compute the AP redundancy score based on a number of strong neighbors of each AP with a different parent switch.

3. The network management system of any of claims 1-2, wherein to compute the switch redundancy score for each network switch, the one or more processors are configured to compute the AP redundancy score based on a number of one or more APs connected to a respective switch and how many of the one or more APs that have redundancy.

4. The network management system of any of claims 1-3, wherein to compute the site redundancy score, the one or more processors are configured to compute the site redundancy score based on a number of the plurality of APs and how many of the plurality of APs have redundancy.

5. The network management system of any of claims 1-4, wherein the one or more programmable processors are further configured to:
obtain one or more metrics indicative of use of each AP of the plurality of APs;
compute, based on the one or more metrics and the at least one of the switch redundancy scores or the site redundancy score, at least one of a weighted switch redundancy score or a weighted site redundancy score.

6. The network management system of claim 5, wherein the one or more metrics include one of:
usage of each AP of the plurality of APs,
location mapping of the location of each AP of the plurality of APs within the network site,
geolocation data of each AP of the plurality of APs,
criticality of one or more client devices connected to each AP of the plurality of APs, or
application traffic data.

7. The network management system of any of claims 1-6, wherein to invoke the one or more actions, the one or more processors are further configured to:
display, on a graphical user interface, GUI, a visual indication of at least one of:
the redundancy of one or more APs,
the redundancy of one or more network switches, or
the redundancy of the site.

8. The network management system of any of claims 1-7, wherein to invoke the one or more actions, the one or more processors are further configured to:
display, on a graphical user interface, GUI, a visual indication of a recommendation regarding placement an AP.

9. The network management system of any of claims 1-8, wherein to invoke one or more actions, the one or more processors are further configured to:
generate one or more recommendations specifying a configuration for redundancy of an AP or a network switch.

10. The network management system of claim 9, wherein the one or more processors are further configured to obtain information regarding one or more cable runs at the network site, and wherein to generate one or more one or more recommendations comprises generate, based on the information regarding the one or more cable runs, a recommendation specifying a particular AP of the plurality of APs to connect to a particular network switch.

11. The network management system of claim 9, wherein the one or more recommendations include for an AP of the plurality of APs equipped with dual uplink, a recommendation of which two network switches to respectively connect to a first port of the AP and a second port of the AP.

12. The network management system of claim 9, wherein the one or more recommendations include in response to one or more changes to the network site, a recommendation to change which APs are connected to which switches.

13. A method comprising:
determining, for each access point, AP, of the plurality of APs of a network site and based on received signal strength indicators, RSSIs, of each AP of the plurality of APs, one or more strong neighbors of each AP;
computing an AP redundancy score for each AP of the plurality of APs indicative of a redundancy of each AP;
computing, based on the AP redundancy scores, at least one of:
a switch redundancy score for each network switch associated with one or more of the plurality of APs, wherein the switch redundancy score is indicative of a redundancy of each network switch, or
a site redundancy score, wherein the site redundancy score is indicative of an overall redundancy of the network site; and
invoking, based on the AP redundancy scores, the switch redundancy score, or the site redundancy score, one or more actions.

14. The method of claim 13, further comprising steps corresponding to the functionality of the network management system as recited by any of claims 2-12.

15. A computer-readable medium comprising instructions that, when executed, cause processing circuity of a computing system to become configured as the network management system of any of claims 1-12 or to perform the method of claims 13-14.
